# EUROPÄISCHE PATENTSCHRIFT

(11) **EP 3 853 678 B1**
(45) Veröffentlichungstag und Bekanntmachung des Hinweises auf die Patenterteilung: **17.01.2024**
(21) Anmeldenummer: 19769508.3
(22) Anmeldetag: 19.09.2019
(51) Int. Cl.: G05B 19/401, B23Q 17/24, A61C 13/00, B23Q 3/00

(54) **VERFAHREN ZUM POSITIONIEREN EINES WERKSTÜCKES UND VORRICHTUNG DAFÜR**
METHOD FOR POSITIONING OF A WORK PIECE AND DEVICE THEREFORE
PROCÉDÉ DE POSITIONNEMENT D'UNE PIÈCE À USINER ET DISPOSITIF CORRESPONDANT

(30) Priorität: 20.09.2018 EP 18195720
(43) Veröffentlichungstag der Anmeldung: 28.07.2021
(73) Patentinhaber: Herting, Torsten, 3818 Grindelwald (CH)
(72) Erfinder: Herting, Torsten, 3818 Grindelwald (CH)
(74) Vertreter: AMMANN PATENTANWÄLTE AG
(86) Internationale Anmeldenummer: PCT/EP2019/075238
(87) Internationale Veröffentlichungsnummer: WO 2020/058442

(56) Entgegenhaltungen:
- WO-A1-2012/079637
- DE-A1- 10 336 390
- DE-A1-102016 222 210
- US-A1- 2011 080 476

## Beschreibung

Die vorliegende Erfindung betrifft ein Verfahren zum Positionieren eines Werkstücks gemäss Oberbegriff des Anspruchs 1. Des Weiteren betrifft Sie eine Vorrichtung zum Positionieren eines Werkstücks gemäss Oberbegriff des Anspruchs 8.

Das bevorzugte Einsatzgebiet und der Ausgangspunkt vorliegender Erfindung ist die Herstellung und nachträgliche Veränderung von Zahnprothesen. Die Erfindung ist jedoch anwendbar auf die Herstellung ganz generell von Werkstücken und insbesondere deren nachträgliche Bearbeitung, wie z. B. Motorenteile, Auto-, Flugzeug-, Schiffs-, Maschinen-, Modellbau- und andere Teile, Werkzeuge usw.

Eine Zahnprothese wird in mehreren Schritten hergestellt. Es wird z.B. zunächst die Prothesenbasis gefräst. Danach wird die Zahn-Schicht auf die Basis aufgeklebt. Dazu muss die Prothese aus der Fräsmaschine entnommen werden und verliert damit ihre Position. Nach dem Wiederbefestigen ist jeweils eine erneute Referenzierung notwendig.

Nach dem Stand der Technik ist dies derzeit mit mechanischen Messtastern möglich, die u.a. folgende Probleme stellen:
- Der Tastarm o.ä. muss mit der Maschine fest verbunden sein.
- Das Tastsystem muss kalibriert werden,
- ist empfindlich auf Temperaturschwankungen,
- erfordert entsprechenden Platz in der Maschine,
- ist technisch aufwändig und
- ist kostspielig

Bestehende Zahnprothesen müssen aus verschiedenen Gründen überarbeitet und angepasst werden. Ein häufiger Grund ist die Änderung des Kiefers, die eine Anpassung der Zahnprothese durch eine Unterfütterung erzwingt, das heisst das Auffüllen entstehender Hohlräume zwischen Zahnfleisch und Prothese. Auch nach dem Entfernen eines oder mehrerer Zähne müssen Zähne und / oder Prothesenbasis verändert werden. Halteelemente, wie Klammern, Implantatabutments, Geschiebe müssen verändert und / oder eingearbeitet werden. Im Zuge einer Neuanfertigung muss eine Zahnprothese anprobiert, gegebenenfalls Probe getragen und entsprechend den Rückmeldungen des Patienten korrigiert werden.

Für Änderungen von Zahnprothesen kommen subtraktive (Schleifen, Fräsen) und additive (3D-Druck, insbesondere Metall-Laserschmelzverfahren) Bearbeitungsverfahren zum Einsatz. Bei jedem dieser Verfahren muss die Prothese (oder allgemein ein Werkstück) exakt in einer definierten Position in den Werkstückhalter der jeweiligen Werkzeugmaschine eingesetzt werden. Eine derartige Positionierung in der erforderlichen Genauigkeit (üblicherweise in der Grössenordnung von 0,1 mm oder besser) ist jedoch sehr aufwändig und zeitraubend. Dieses Problem rührt daher, dass Werkzeugmaschinen Bearbeitungsvorgänge gemäss Daten ausführen, die von einer Konstruktionssoftware (CAM-System) oder einer anderen Quelle stammen, ohne dass die Beziehung der Lage der Koordinatensysteme von Werkzeugmaschine und vom CAM-System, dem Konstruktionskoordinatensystem, zueinander bekannt ist.

Im Konstruktionskoordinatensystem besteht regelmässig ein Bild des Werkstücks, z.B. vor und nach der vorgesehenen Bearbeitung, und in diesem Koordinatensystem sind insbesondere die Bearbeitungsschritte (Werkzeugbewegungen etc) festgelegt. Für die realen Bearbeitungsschritte, insbesondere bei automatisierter, computergesteuerter Ausführung, müssen die Koordinaten der Bearbeitungsschritte mit entsprechend hoher Präzision aus dem Konstruktionskoordinatensystem in das Koordinatensystem abgebildet werden, das sich aus der realen Lage des Werkstücks in der Werkzeugmaschine ergibt, und dies darüber hinaus in einem Koordinatensystem, in dem die Werkzeugmaschine die Bearbeitungsschritte durchführt. Damit besteht ein weiteres Problem darin, dass diese Abbildung auch von der räumlichen Anordnung des Werkstücks in der Werkzeugmaschine abhängt.

Eine Aufgabe der vorliegenden Erfindung besteht daher darin, das genaue Positionieren eines Werkstückes in einer Werkzeugmaschine einfacher zu gestalten.

Ein entsprechendes Verfahren ist im Verfahrensanspruch 1 angegeben. Die weiteren Ansprüche geben bevorzugte Ausführungsformen des Verfahren und Vorrichtungen zum Einsatz in diesem Verfahren an.

Bei dem Verfahren wie auch der Vorrichtung wird ausgenutzt, dass es mit geringem Aufwand möglich ist, aufgrund der vorliegenden Konstruktion, das heisst digitalen Daten zur Steuerung einer numerisch gesteuerten (computergesteuerten) Werkzeugmaschine, ein Duplikat des jeweiligen Werkstücks formgetreu aus einem preiswerten Material herzustellen. Das Duplikat wird auf einer Basis oder Plattform hergestellt und bildet mit dieser einen sogenannten Rohling. Von dem Duplikat wird auf einem Gegenstück, dem sogenannten Konter, ein Abdruck erstellt. Der Abdruck kann sich dabei auf ausgewählte Stellen des Duplikats ("Referenzzonen") beschränken, die insgesamt hinreichend prägnant sind, so dass beim Entfernen des Duplikats und Wiederaufsetzen auf den Abdruck reproduzierbar das Duplikat bzw. in einem späteren Schritt das Original des Werkstücks in der gleichen Position auf dem Abdruck einrastet. Bei einer Zahnprothese können diese prägenden Stellen hinreichend ausgedehnte Oberflächenabschnitte der Zähne, das heisst deren Kauflächen, aber auch die Unterseite der Prothese oder die Aussenflächen sein. Falls dabei an den Zähnen eine Bearbeitung vorgesehen ist, sind diese natürlich nicht für diese Referenzzonen verfügbar. Neben den Referenzzonen können beliebige weitere Abschnitte des Werkstücks im Duplikat enthalten sein bis zum vollständigen Werkstück, soweit diese zusätzlichen Abschnitte nicht die vorgesehenen Bearbeitungsschritte behindern.

Der Konter weist einen Positionierungsabschnitt auf, der bevorzugt ausserhalb des Bereichs liegt, der vom Werkstück abgedeckt wird. In diesem Positionierungsabschnitt sind eine oder mehrere Schlüsselstrukturen angeordnet. Die Schlüsselstrukturen sind derart ausgebildet, dass sie es gestatten, den Konter auf einer Basis, in der Regel einem Rohling, genau in einer vorgegebenen Position anzubringen. Die Gegenstücke zu den Schlüsselstrukturen am Konter, die Rohlingschlüsselstrukturen, werden von der jeweiligen Werkzeugmaschine hergestellt. Ihre Position ist also im Koordinatensystem der Werkzeugmaschine bekannt. Somit ist auch die Position der Schlüsselstrukturen am Konter bezüglich des Abdrucks der Referenz des Werkstücks, insbesondere einer Zahnprothese, bekannt. Insgesamt ist es damit möglich, die Position eines Werkstücks (einer Zahnprothese), das am Rohling oder auch am Abdruck des Konters angebracht ist, sowie die genaue Positionierung des Konters über die Schlüsselstrukturen am Rohling genau bezüglich des Koordinatensystems der Werkzeugmaschine festzulegen. Durch das Fräsen des Duplikates zeigt die Maschine, in welcher Position sie das Werkstück bearbeitet. Durch Verwendung des Konters wird dann das Werkstück in exakt dieser Position fixiert.

Mit diesem Wissen ist es möglich, die Konstruktion in Werkzeugkoordinaten umzurechnen, womit genau an den geplanten Stellen eine definierte Bearbeitung des Werkstücks möglich ist.

Eine andere Möglichkeit, die Koordinatensysteme von Werkzeugmaschine, Konstruktion (CAM-Daten) und Werkstück aufeinander abzubilden, besteht darin, einen Scan des Werkstücks auszuführen, wenn es sich in der Werkzeugmaschine auf einem Rohling befindet, wobei vorgängig Referenzmarkierungen oder Referenzmerkmale an definierten Positionen des Werkstücks und Schlüsselmerkmale (Schlüsselstrukturen) am Rohling angebracht werden. Die Schlüsselstrukturen werden dabei jedenfalls von der Werkzeugmaschine erzeugt, wodurch diese vorgegebenen Koordinaten der Werkzeugmaschine entsprechen. Durch die Referenzmarkierungen am Werkstück ist eine exakte Erkennung der Lage des Werkstücks im Scan möglich. Alternativ kann auf prägnante Merkmale des Werkstücks selbst zurückgegriffen werden. Oft führt dies jedoch zu einer geringeren Präzision der Erkennung der Lage des Werkstücks im Raum und zu einem erhöhten Rechenaufwand.

Das erfindungsgemässe Verfahren bietet je nach Realisierung mindestens einen der folgenden Vorteile, in bevorzugten Ausführungsformen auch bis zu alle diese Vorteile:
- Mit mobilen Intraoralscannern durchführbar: Derartige Scanner sind in Dentalpraxen mit digitaler Ausrüstung vorhanden, was einen finanziellen Vorteil bietet.
- Höhere Präzision
- Temperaturunabhängigkeit
- Maschinenunabhängigkeit
- Keine bauliche Veränderung der Maschine notwendig (u.a. finanzieller Vorteil)
- Einfachere Handhabung

Die Erfindung wird weiter an Ausführungsbeispielen unter Bezugnahme auf Figuren erläutert. Es zeigen:
- Figur 1: Draufsicht auf eine Zahnprothese als Prototyp eines Werkstücks;
- Figur 2: Ansicht von unten auf eine Trägerplatte für einen Konter (Gegenstück);
- Figur 3: Draufsicht auf Rohling (Basis) mit Werkstück (Zahnprothese);
- Figur 4: Schnitt gemäss IV - IV in Figur 3;
- Figur 5: Schnitt gemäss V - V in Figur 2 und IV.-IV in Fig. 3 nach Ausbilden des Werkstücknegativs (Prothesenabdruck);
- Figur 6: Schnitt wie Figur 5, Abdruck vom Rohling abgehoben;
- Figur 7: Seitenansicht auf eine reduzierte Prothese;
- Figur 8: Schnitt durch einen Rohling gemäss VIII - VIII in Fig. 13, Raum für Prothese freigelegt;
- Figur 9: Darstellung analog Figur 6, reales Werkstück (Zahnprothese) in Aufnahme gemäss Figur 8 eingelegt und Gegenstück mit Abdruck aufgesetzt;
- Figur 10: Draufsicht auf Zahnprothese mit Referenzierkügelchen;
- Figur 11: Draufsicht auf Rohlingplattform mit Schlüsselstrukturen;
- Figur 12: Virtueller Rohling mit Werkstück;
- Figur 13: Draufsicht auf Rohling mit Aussparung für eine Prothese;
- Figur 14: Draufsicht auf Rohling gemäss Figur 13 mit eingelegter Prothese, Idealposition gem. Fig. 12 gestrichelt;
- Figur 15: Schnitt gemäss XV - XV in Figur 14; und
- Figur 16: Draufsicht analog Figur 14 mit Angabe von Referenzpunkten (schematisiert).

### Erstes Ausführungsbeispiel

Gemäss erstem Ausführungsbeispiel wird ein Werkzeug hergestellt, das es gestattet, eine Zahnprothese oder allgemein ein Werkstück derart in einer Werkzeugmaschine anzuordnen, dass seine Lage exakt mit einer vorhandenen, numerischen Konstruktion übereinstimmt. Die Konstruktion kann für Anpassungen oder Modifizierungen überarbeitet werden, wonach mit Hilfe einer Werkzeugmaschine exakt an den vorgegebenen Stellen am realen Objekt die Änderungen unter numerischer Steuerung vorgenommen werden.

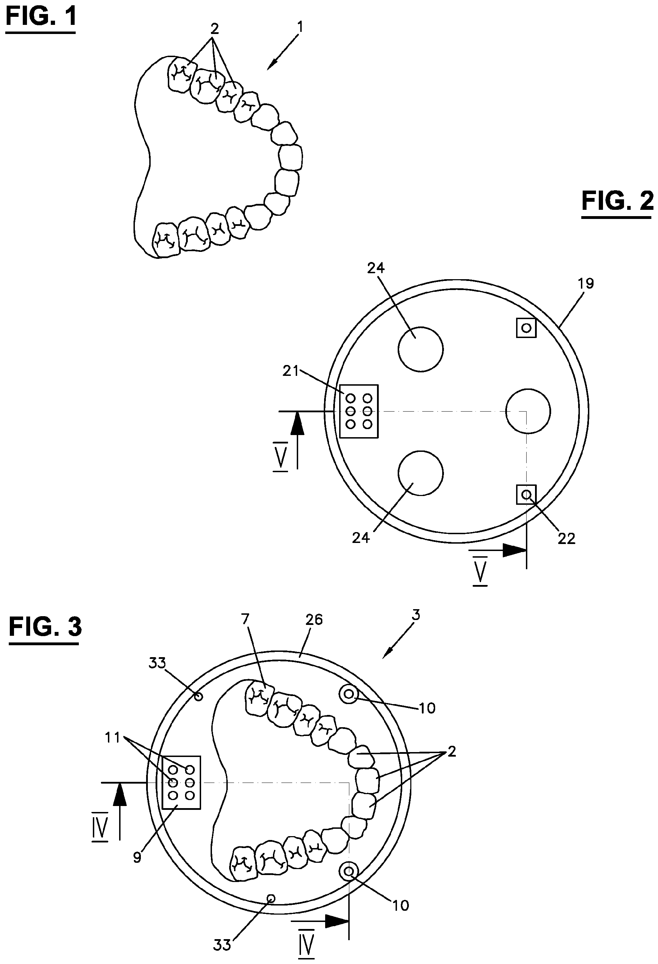

Eine beispielhaft in Figur 1 dargestellte Zahnprothese 1 mit Zähnen 2 (teilweise mit Bezugszeichen versehen) wird eingescannt und in einem geeigneten Konstruktionsprogramm erfasst. Mittels des Konstruktionsprogrammes können die benötigten Änderungen am digitalen Abbild der Zahnprothese 1 geplant werden. In einer Werkzeugmaschine (additive oder subtraktive Fertigung) wird ein Rohling 3 erstellt. Der Rohling 3 umfasst eine Plattform 5, auf der eine Teilkopie 7 der Zahnprothese 1 hergestellt wird. Notwendig sind nur die Strukturen zur Referenzierung bzw. zur Fixierung im Konter: i.d.R. die Kauflächen der Prothesenzähne. Ausserhalb des Bereichs der Zahnprothese 7 werden ebenfalls von der Werkzeugmaschine, die das Duplikat 7 herstellt, Schlüsselstrukturen 9 und 10 hergestellt. Die Schlüsselstruktur 9 besteht im Wesentlichen aus einer Anordnung kreisförmiger Noppen 11 (hier sechs Noppen) ähnlich bekannten Steckbausteinen.

Der Rohling (Basis) 3 besteht aus einem formstabilen Material und insbesondere einem Material, das als Bestandteil des Werkstücks nach der Bearbeitung dient. Z. B. kann es sich bei dem Material um rosafarbenen Kunststoff, oft PMMA oder ein anderes physiologisch akzeptables Polymer oder Basismaterial, handeln, der als Unterfütterungsmaterial bei Zahnprothesen eingesetzt wird. Denkbar ist auch Stahl, Kunststoff, Titan, Modellguss, insbesondere faserverstärkter Kunststoff, und Keramik. Ausserdem kann er die erforderlichen Vorkehrungen (hier nicht dargestellt) wie Nuten, Bohrungen usw. tragen, die benötigt werden, um ihn in einer Werkzeugmaschine, bevorzugt in genau festgelegter Position, anzubringen.

Offensichtlich kann ein dazu komplementär ausgebildetes Gegenstück aufgesteckt werden, wodurch eine sehr genaue Positionierung des Gegenstücks auch bezüglich Drehbewegung erzielbar ist. Der zweite Typ Schlüsselstruktur 10 zeigt eine Alternative, wobei mehrere (hier zwei) auf dem Rohling hergestellt werden, die zwar einzeln noch eine Bewegungsfreiheit eines aufgesetzten, komplementär gebildeten Gegenschlüssels gestatten, jedoch in der Gesamtheit ebenfalls eine genaue Positionierung bewirken. Gezeigt sind kreiszylindrische Noppen 11. Wenigstens eine zusätzliche Schlüsselstruktur, die beabstandet von der anderen angeordnet ist, ist jedoch vorteilhaft, um die Genauigkeit der Positionierung zu erhöhen.

Bei den Schlüsselstrukturen 9 und 10 sind vielfältige Formen denkbar, die von den dargestellten abweichen. Essentiell ist dabei, wie unten noch ausgeführt, dass ein daraufgesetztes Gegenstück in genau einer Position und ohne weitere Bewegungsmöglichkeit aufgesetzt werden kann. Naheliegend sind z.B. statt kreiszylindrischen Noppen polygonale oder jedenfalls von der Kreisform abweichende Formen, wie elliptisch und oval. Statt Noppen können auch Vertiefungen, also Bohrungen vorgesehen sein, wonach das Gegenstück entsprechend anstatt Vertiefungen Erhebungen entsprechender Form aufweisen muss oder umgekehrt.

Die Zahl von Noppen ist nicht massgebend. Denkbar ist von mindestens 2 (da bereits zwei Noppen nicht nur eine Verschiebung verhindern, sondern auch eine Drehung), 3, 4, 5, 6, 7, 8 und mehr Noppen, oder auch eine unregelmässige, aber im Wesentlichen nur eine relative Position zu einem Gegenstück zulassende Konfiguration. Denkbar sind auch Noppen, die keinen kreisförmigem Querschnitt aufweisen, wie elliptisch, oval, eiförmig, polygonal (bevorzugt 3-eckig bis 6-eckig, um noch ausgeprägte Ecken und damit hohen Widerstand gegen Verdrehen zu erhalten, wobei höhere Eckenzahlen grundsätzlich denkbar sind, aber einen Übergang zu den Eigenschaften einer Noppe mit kreisförmigem Querschnitt bilden) und die bereits einzeln ein Verdrehen um die Hochachse der Noppe verhindern. Ein Anordnung von mindestens 2 Noppen ist bezüglich Verdrehsicherung vorzuziehen, und eine Mehrzahl von Noppen bietet grundsätzlich eine höhere Präzision der Positionierung auf einem Gegenstück durch ein grösseres Verhältnis zwischen wirksamer Fläche der Schlüsselstruktur (Noppenanordnung) und der Gesamtfläche des Rohlings bzw. der Prothese, bzw. des maximalen Durchmessers (bspw. die Entfernung der Mitten [Schwerpunkte] der am weitesten entfernt voneinander angeordneten Noppen) der Schlüsselstruktur zu dem grössten Durchmesser der Prothese oder des Rohlings insgesamt (hier wegen der Kreisform: sein Durchmesser). Entsprechend dient auch die Anordnung von mehr als einer Schlüsselstruktur, hier prototypisch der Schlüsselstruktur 9 und der einfacher ausgeführten Schlüsselstrukturen 10 der Vergrösserung dieses Verhältnisses und damit der genaueren Positionierung.

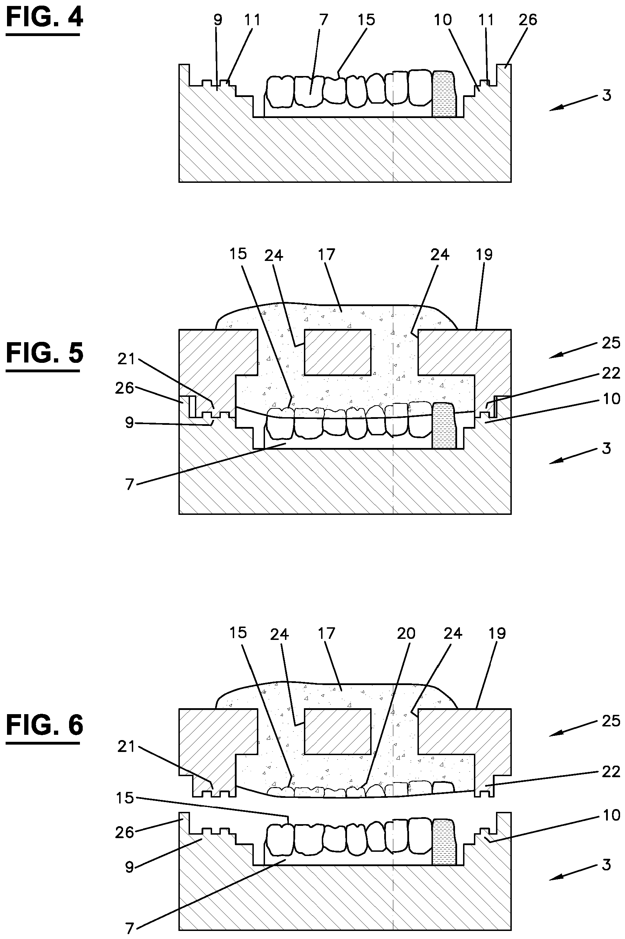

Die Prothese oder allgemein das Werkstück muss auch nicht vollständig dupliziert werden, es genügt vielmehr hinreichend viele, prägnante Teile auszubilden, dass das Originalteil in einem von dem Duplikat angefertigten Abdruck genau und eindeutig positioniert werden kann. Wie in Figur 4 sichtbar, können dies insbesondere eine genügend grosse Anzahl von Kauflächen des Duplikats 7 bzw. der Zahnprothese 1 sein. Nicht verwendbar sind offensichtlich diejenigen Gebiete, die zur Bearbeitung vorgesehen sind.

Auf den Rohling 3 wird eine geeignete Abgussmasse 17 (Gips; thermoplastisches oder dauerhaft härtbares (z.B. durch Vernetzen) polymeres Material) und ein Referenzierschlüsselhalter 19 aufgebracht (siehe Figur 5).

Der Referenzierschlüsselhalter 19 (siehe Figur 2) weist zum einen Schlüsselstrukturen 21, 22 auf, die komplementär zu den Schlüsselstrukturen 9, 10 des Rohlings ausgebildet sind. Die Durchbrüche 24 dienen dazu, durch Hindurchtreten des Abdruckmaterials 17 den ausgehärteten Abdruck am Referenzschlüsselhalter 19 zu verankern. Nach dem Aushärten des Abdruckmaterials 17 liegt ein sogenannter Konter 25 oder ein Gegenstück vor, das im Wesentlichen aus dem Referenzschlüsselhalter 19 und dem ausgehärteten Abdruckmaterial 17 besteht und an seiner Oberfläche wenigstens in Teilen ein exaktes (negatives) Abbild 20 der Oberfläche des Duplikats 7 aufweist. Wie in Figur 4 dargestellt, liegt der Referenzschlüsselhalter 19 auf Anschlag auf dem Rohling auf und insbesondere die Schlüsselstrukturen 9, 10 bzw. 21, 22 greifen ineinander ein, so dass der Konter 25 genau in dieser Position wieder auf dem Rohling angebracht werden kann. In der Figur ist verdeutlichet, dass der Abstand durch die Höhe des Rands 26 vorgegeben ist, so dass die Schlüsselstrukturen zwar genügend hoch sein müssen, um ineinander einzugreifen, aber den Abstand von Rohling 3 und Referenzschlüsselhalter 19 nicht bestimmen.

Denkbar ist jedoch, dass die Schlüsselstrukturen 9, 10 und 21, 22 auch den Abstand zwischen Rohling 3 und Referenzschlüsselhalter 19 festlegen, also auf Anschlag aneinander anliegen. Der Rand 26 kann jedoch dann immer noch als umlaufende Erhebung vorhanden sein, z. B. um das Auslaufen von Fixiermittel 29 (s.u.) aus dem Rohling 3 zu verhindern.

Für das Material des Referenzschlüsselhalters gelten dieselben Überlegungen wie für den Rohling 3 weiter oben angestellt.

Figur 6 stellt den Konter 25 vom Rohling 3 abgehoben dar.

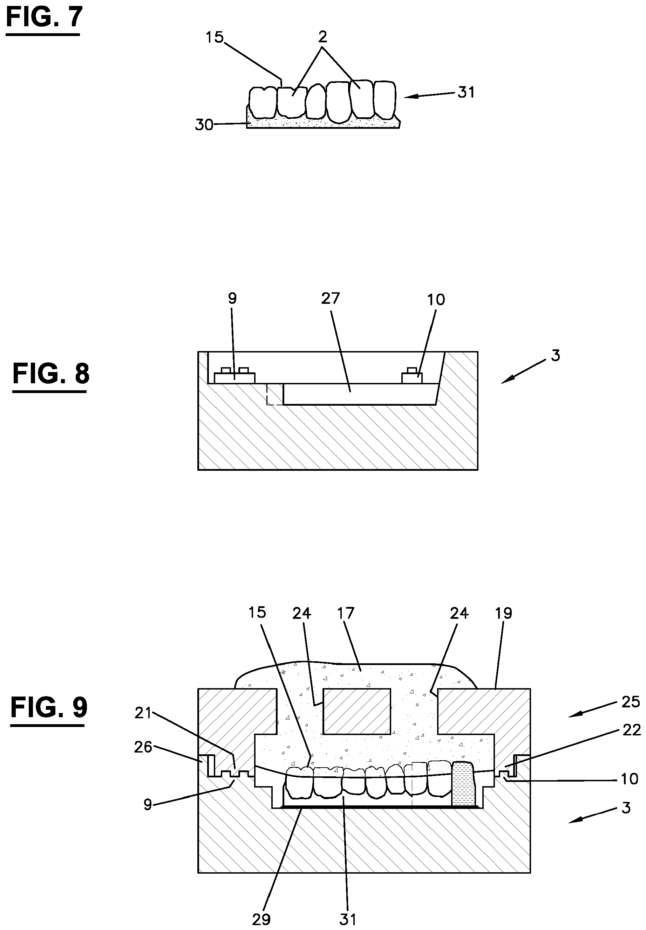

Das Duplikat 7 wird abgetragen um einen Freiraum 27 zur Aufnahme der Zahnprothese 1 zu erhalten. In den Freiraum 27 wird ein fliessfähiges Material 29 in geeigneter Menge eingebracht. Dieses Material 29 kann ein Konstruktionsmaterial sein, das dazu dient, später einen Teil der Prothese 1 darzustellen. Denkbar ist auch ein anderes geeignetes Material, das geeignet ist, die Prothese 1 an den Abdruck 20 im Konter 25 anzupressen. Vorliegend wird beispielhaft die Zahnprothese 1 wie in Figur 7 dargestellt bis zu den Zähnen 2 reduziert, das heisst auf jeden Fall das gesamte Unterfütterungsabdruckmaterial abgetragen. Die reduzierte Prothese, die unten plan abgefräst ist, kann auf dem Rohling 3 mit einem Klebstoff als Fixiermittel 29 befestigt werden, der selbst als Material der Zahnprothese dient. Der Rohling 3 besteht dabei ebenfalls aus Imitatmaterial. Bekannt ist für diesen Zweck Polymethylmethacrylat, das geeignet eingefärbt ist, um als Gingivaimitat zu dienen. Durch Aufsetzen des Konters 25 wird die Prothese 1 in der durch den Abdruck 20 festgelegten Position fixiert, bevor sich das Fixiermittel verfestigt und damit die Prothese auf dem Rohling 3 fixiert.

Auf dem Rohling 3 kann auch eine grössere Menge Gingivaimitatmaterial als Fixiermittel 29 im Freiraum 27 im Übermass eingefüllt und die (reduzierte) Prothese 31 aufgelegt werden. Der Konter 25 wird aufgesetzt, wobei die reduzierte Prothese 31 in das Fixiermittel 29 eingedrückt wird, das hier gleichzeitig als Rohmaterial für das Imitat der Gingiva an der Zahnprothese dient.

Fixiermaterial in grösseren Schichtdicke dient generell dazu, die Prothese an und sogar in das Abdruckmaterial zu drücken, wobei Abweichungen der anliegenden Oberflächen ausgeglichen werden, und dort zu halten, bis das Fixiermittel verfestigt ist. Das Fixiermittel 29 ist wenigstens zähflüssig bis knetartig. Denkbar ist auch ein thixotropes Material oder ein anderes Material, das unter einem äusseren Einfluss wie einer mechanischer Belastung, z.B. Vibrieren oder Verschieben, bei Erwärmen oder Bestrahlen an Viskosität verliert bzw. überhaupt sich hinreichend verflüssigt und selbsttätig wieder in einen festen Zustand übergeht. Regelmässig, und insbesondere dann, wenn das Fixiermittel einen Teil der bearbeiteten Prothese bildet, wird eine irreversible Härtung oder Verfestigung vorgenommen, z.B. eine Polymerisierung oder Vernetzung. Letzteres kann durch Erwärmen, Bestrahlung (elektromagnetische Strahlung wie Licht, Mikrowellen, Röntgen, Korpuskularstrahlung (Elementarteilchen, wie Elektronen) oder Kombinationen daraus erzielt werden. Denkbar ist auch eine zeitgesteuerte Aushärtung durch verzögerte Aktivierung eines zugesetzten Katalysators für die Polymerisierung.

Wie in Figur 9 verdeutlicht, befindet sich nun einerseits die Prothese 1 in einer genau definierten Lage auf dem Konter 25 durch die exakte Passung am Abdruck 20, hier durch wenigstens einen Teil der Kauflächen 15, und andererseits befindet sich auch der Konter 25 selbst durch den passgenauen Sitz der Schlüsselstrukturen 9, 11 bzw. 21, 22 relativ zum Rohling 3 in einer genau definierten Position. Insgesamt befindet sich damit die Zahnprothese 1 in genau der Position, in der auf dem Rohling 3 das Duplikat 7 der Zahnprothese 1 angefertigt wurde.

Für die weitere Bearbeitung kann der Konter 25 in einer denkbaren Variante mit der daran auf geeigneter Art vorübergehend befestigten reduzierten Zahnprothese und dem daran anhaftenden Polymermaterial, dem Fixiermittel 29, das hier jedoch keine besondere Haftwirkung zum Rohling 3 aufweist, vom Rohling 3 abgehoben und mittels des Referenzschlüsselhalters 19 in einer Werkzeugmaschine positioniert werden. Die Befestigung der Prothese 1 am Konter 25 kann z.B. durch einen Klebstoff (allgemein eine haftvermittelnde Substanz) erfolgen, der vorgängig auf wenigstens einem Teil der Kontaktzonen zwischen Abdruck 20 und Prothese 1 aufgetragen wird. Im Hinblick auf die Stärke der Haftvermittlung ist wenigstens ein solcher Bereich zu bedecken, dass die Anforderungen nachfolgender Bearbeitungsschritte erfüllt werden. Im einfachsten Fall wird die gesamte Kontaktfläche des Abdrucks 20 mit Klebstoff versehen. Der Klebstoff ist geeignet gewählt, um nach Bearbeitung aufgelöst, geschwächt (z.B. durch Erwärmen) oder anderweitig genügen unwirksam oder zerstört zu werden, dass die Prothese vom Konter 25 entfernt werden kann, ohne Schaden zu nehmen. Es ist auch eine subtraktive Bearbeitung der Klebeflächen durch die Maschine möglich (abschleifen).

Denkbar ist, den Klebstoff durch Einwirken eines Lösungsmittels zu entfernen, z.B. durch Eintauchen in ein Lösungsmittel. Eine weitere Möglichkeit ist eine starke Temperaturänderung, also Erwärmen oder auch Abkühlen, in einen Temperaturbereich, in der der Klebstoff Zusammenhalt oder Haftkraft oder beides wenigstens teilweise verliert.

Bevorzugt wird jedoch der Konter 25 nach Aushärten des Fixiermittels 29 abgehoben. Der Rohling 3 mit Prothese 1 wird auf eine an sich bekannte Art in der Werkzeugmaschine zur Bearbeitung fixiert.

Da sich nun die Prothese 1 innerhalb der Werkzeugmaschine in einer Position befindet, deren Koordinaten innerhalb der Werkzeugmaschine bekannt sind, kann eine Bearbeitung des Gingivaimitats erfolgen, ohne die Prothese zu beschädigen.

Soll dagegen eine Änderung an den Kauflächen 15 der Zahnprothese 1 durchgeführt werden, so kann das Fixiermittel 29 als stabile, aber später wieder auflösbare Verbindung zum Rohling 3 ausgelegt sein. Durch die oben genannte genaue Positionierung aller Teile gemäss Figur 9 ist nun auch die Prothese auf dem Rohling 3 genau positioniert und kann damit in einer Werkzeugmaschine genau bearbeitet werden, da die Koordinaten des Scans der Prothese gemäss Figur 1 in die Koordinaten der Werkzeugmaschine umgerechnet werden können.

Falls die genaue Anordnung des Konters 25 bzw. des Rohlings 3 mit der Prothese 1 in der Werkzeugmaschine problematisch ist, besteht die Möglichkeit, diese ohne genaue Positionierung an der Werkzeugmaschine anzubringen. Wenn die Sollposition der Schlüsselstrukturen 9,10 oder 21, 22 in Maschinenkoordinaten nicht bekannt sind oder die Schlüsselstrukturen nicht zur genauen Positionsbestimmung, z.B. durch Einscannen, geeignet sind, können an vorgegebenen Positionen Maschinenreferenzmarkierungen 33 angebracht werden, z. B. kleine Löcher. Dann wird der Rohling 3 bzw. der Konter 25 gescannt. Aus der relativen Position der Maschinenreferenzmarkierungen 33 und der Schlüsselstrukturen 9, 10 oder 21, 22 kann eine Abbildungsfunktion der Konstruktionsdaten auf die Maschinenkoordinaten erstellt werden. Im Resultat ist es damit möglich, die Konstruktionsdaten, die anhand des eingangs genannten Scans der Prothese 1 aus Figur 1 erstellt wurden, genau auf die reale Position der Prothese 1 in der Werkzeugmaschine abzubilden - die Prothese 1 ist im Träger bzw. Konter 25 exakt an der Position des Duplikats positioniert - und damit numerisch die Werkzeugmaschine genau zu den vorgesehenen Bearbeitungsvorgängen an der Prothese 1 anzusteuern.

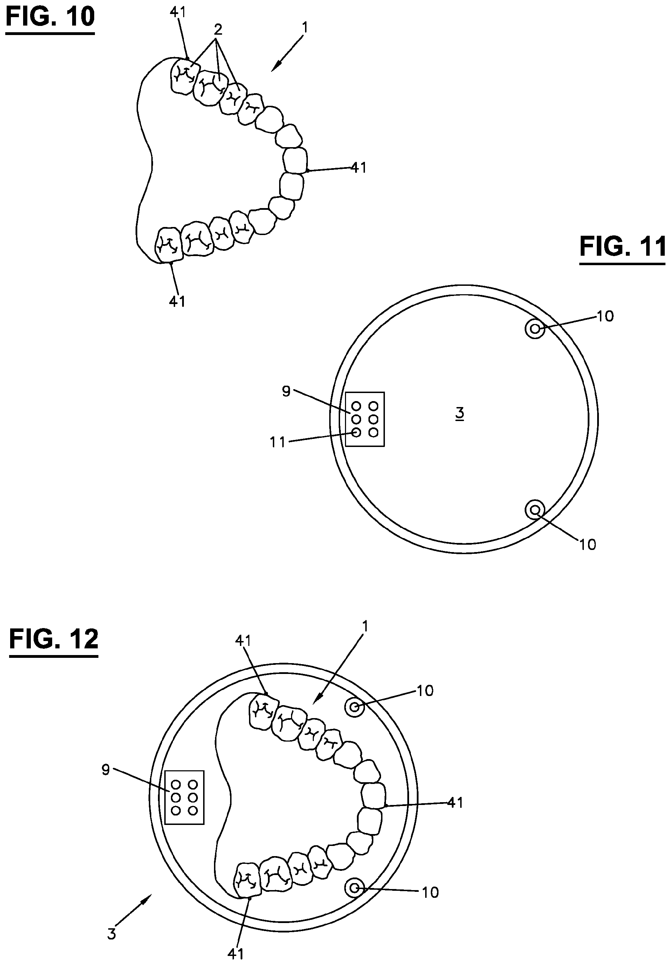

Zweites, nicht unter den Schutzbereich fallendes **Ausführungsbeispiel** Wie in Figur 10 gezeigt, werden an der Prothese 1 Referenzierkörper 41 (hier: Kügelchen) aufgeklebt, zum Beispiel mit Wachs. Aus Gründen der Präzision werden die Referenzierkügelchen 41 an möglichst weit entfernten Punkten angebracht, im Beispiel an einem der Frontzähne und an den am weitesten hinten liegenden Backenzähnen. Kügelchen, also kleine Kugeln, haben den Vorteil, dass sie in beliebiger Position angeklebt werden können und aus allen Raumrichtungen das gleiche Bild bieten. Denkbar sind jedoch auch andere kleine Körper, die gut erkennbar sind und deren Lage im Raum sich genau bestimmen lässt. Sie sollten gross genug sein, um noch gut erkennbar zu sein, andererseits auch klein genug, um einfach anklebbar zu sein und die weiteren Schritte nicht zu stören. Bevorzugt sind Grössen (Durchmesser) im Bereich weniger Millimeter, z.B. 1 mm - 5 mm, bevorzugt 1 mm. Als Material für die Kügelchen, oder allgemein Körper, kommt eines in Frage, das gut scanbar ist, also einen klaren Kontrast und scharfe Konturen liefert. Je nach Hintergrund empfiehlt sich weiss oder schwarz, gegebenenfalls auch eine zum Hintergrund einen hohen Kontrast bildende Farbe. Eine matte Oberfläche ist von Vorteil, um Reflexe aus der Umgebung zu unterdrücken.

Die Referenzierkügelchen 41 (oder allgemeiner Referenzierkörper oder Referenzmarkierungen) müssen offensichtlich an genügend verschiedenen Orten angebracht sein (bevorzugt in möglichst grossem Abstand voneinander), dass sie sich unterscheiden lassen, also mit hinreichender Auflösung Länge und Lage einer Strecke im Raum bestimmbar ist, die die Kügelchen verbindet. Weitere Kügelchen dürfen generell nicht auf einer bereits gegebenen Verbindung zweier Kügelchen liegen, oder in einer von drei anderen Kügelchen gebildeten Ebene bei mindestens 4 Kügelchen. Generell besteht also ein Basissatz von Referenzmarkierungen aus Merkmalen, von denen keines Teil eines geometrischen Objekts (Strecke, Polygon) ist, das durch eine beliebige Untermenge der anderen Referenzmarkierungen definiert ist. Denkbar ist jedoch, zusätzliche, eigentlich redundante Kügelchen anzubringen, die der Erhöhung der Messgenauigkeit dienen, z.B. durch Mittelwertbildung, oder als Sicherheit für den Fall, dass eines der Kügelchen abfällt.

Denkbar ist, als Referenzmarkierung einen Oberflächenabschnitt der Prothese einzusetzen, der genügend charakteristisch ausgebildet ist. um mit Bilderkennungsverfahren erkannt und genau lokalisiert zu werden.

Die Prothese 1 mit Referenzierkügelchen 41 wird eingescannt. Anhand der eingescannten Daten, die das Erstellen eines virtuellen Duplikats gestatten, werden die benötigten Bearbeitungsschritte in einer geeigneten Konstruktionssoftware wie ein CAM-System festgelegt. Im Wesentlichen wird dabei ein virtuelles Bild (s. Fig. 12) des Rohlings 3 mit Prothese 1, dem Werkstück, und zusätzlich den Schlüsselstrukturen 9, 10 wie auch den Referenzierkörpern 41 erstellt. An diesem Bild werden die Bearbeitungsschritte festgelegt.

Ein Rohling 3 (Figur 11) wird in der Werkzeugmaschine mit Schlüsselstrukturen 9, 10 versehen. Im Gegensatz zum 1. Ausführungsbeispiel dienen die Schlüsselstrukturen jedoch als Maschinenreferenzmarkierung zur Bestimmung der Lage des Koordinatensystems der Werkzeugmaschine, da sie an den Orten gebildet werden, die vom CAM-System vorgegebenen Daten entsprechen. Bevorzugt sind Strukturen, die gut in einem Scan sichtbar und eine hohe Präzision der Bestimmung der Position gestatten. Neben den beispielhaft gezeigten Formen, die im Wesentlichen denjenigen des 1. Beispiels entsprechen, kann eine solche Maschinenreferenzmarkierung einfach aus einem Loch (Durchmesser beispielsweise maximal 5 mm, bevorzugt höchstens 3 mm) bestehen. Vorteilhaft können auch Erhebungen sein, z. B. kegelförmige oder pyramidale, wobei die jeweilige Spitze durch Schneiden der Flanken genauer bestimmt werden kann. Für eine Unterscheidung können Anordnungen oder unterschiedliche Arten verwendet werden, wie in den Figuren die Struktur 9, die sich von den Strukturen 10 unterscheidet.

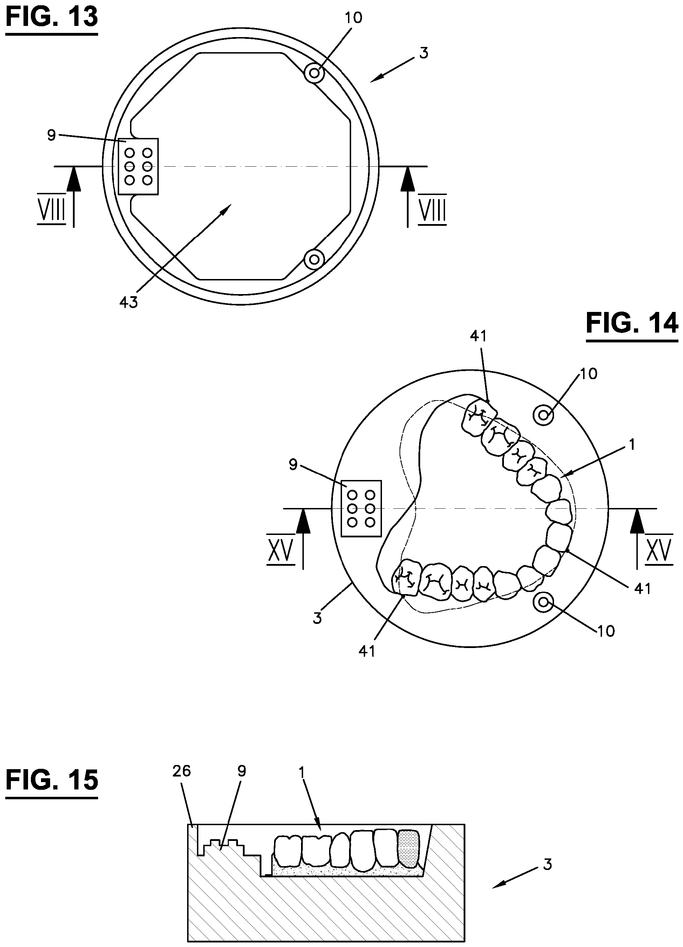

Der Rohling 3 wird, wenn nötig, mit einer freigelegten Fläche 43 versehen, auf der die Zahnprothese 1 angeordnet werden kann (siehe Figur 14).

Die Prothese 1 wird wie beim 1. Ausführungsbeispiel auf dem Rohling angebracht, entweder in der Fläche 43 oder nach Entfernen (z.B. durch Fräsen) des Duplikats 7 wie in Figur 12 dargestellt.

Auf der Fläche 43 wird die Zahnprothese 1 aufrecht wie in Figur 15 dargestellt oder auch mit der Unterseite nach oben befestigt, je nachdem ob die Oberseite oder die Unterseite bearbeitet werden muss, oder es wird wie oben beschrieben der Konter 25 eingesetzt, um die Unterseite bearbeiten zu können.

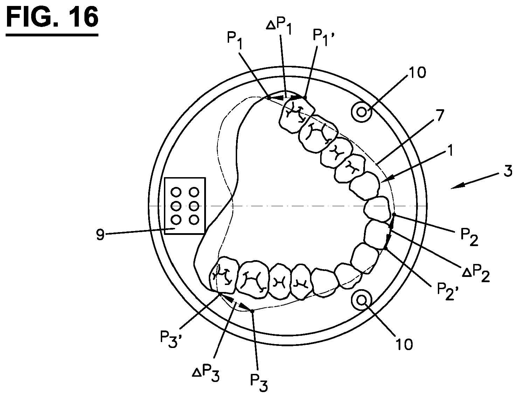

Wie in Figur 14 übertrieben dargestellt, stimmt die Lage der Prothese auf dem Rohling 3 mit Sicherheit nicht, oder wenigstens nicht genau genug, mit der Position gemäss Konstruktion (siehe Figur 12) überein, die in einer unterbrochenen Linie als Kontur des Duplikats 7 angedeutet ist. Die Lage der Prothese 1 auf dem Rohling 3 kann jedoch nun durch einen erneuten Scan insbesondere der Referenzierkügelchen 41 erfasst werden. Wie in Figur 16 dargestellt, kann nun jeweils die Verschiebung ΔP1, ΔP2, ΔP3 der Konstruktionspunkte (hier drei, nämlich P1, P2 und P3) gegenüber den an der realen Prothese 1 gemessenen Positionen (P1', P2', P3') ermittelt werden. Mit der Randbedingung, dass die Grösse der Konstruktion, also die relative Lage der Punkte P1 - P3 bzw. P1' - P3' zueinander identisch ist, genügen 3 Punkte, um die Konstruktion auf die Lage der realen Prothese gemäss 14 umzurechnen.

Vorstellbar ist dies schematisch z.B. durch folgendes Verfahren:
1. Punkt P1 wird auf P1' verschoben;
2. es folgt eine Drehung um eine Achse durch P1' (ist gleich P1), wobei die Drehachse senkrecht auf einem Dreieck steht, das durch P1', P2 und P2' gebildet wird. Durch diese Drehung wird Punkt P2 auf P2' gedreht, so dass P2 gleich P2' nach dieser Operation gilt;
3. eine Drehung um eine Achse durch P1' und P2' folgt, wobei P3 auf P3' bewegt wird.

Dabei werden auch Veränderungen senkrecht zu Zeichenebene, also real der Oberfläche der Plattform 5, berücksichtigt- Die Lagedifferenzen ΔP1, ΔP2, ΔP3 können also auch eine Komponente senkrecht zur Zeichenebene enthalten.

Verschiedene Massstäbe beim Scannen der Prothese 1 gemäss Figur 10 und der Prothese 1 auf Rohling 3 gemäss Figur 14 können berücksichtig werden, indem die Distanzen zwischen den Referenzkügelchen jeweils bestimmt und ins Verhältnis gesetzt werden. Dabei wird vorausgesetzt, dass der unterschiedliche Massstab in alle Raumrichtungen gilt.

Die vorgenannten Verfahren erlauben es, die erforderliche Präzision jedenfalls für die Nachbearbeitung von Zahnprothesen einzuhalten. Diese liegen in der Regel bei einer Bestimmung der Bearbeitungskoordinaten mit einer Toleranz von heutzutage ca. 30 µm (0,03 mm). Als untere Grenze der Verarbeitungsgenauigkeit kann eine Abweichung von höchstens 0,5 mm angesehen werden, besser und für die Praxis eher tauglich sind Abweichungen von höchstens 0,2 mm und insbesondere 0,1 mm.

Eine interessante Anwendung dieses Verfahrens, um ein Nachbearbeiten einer Prothese oder allgemein eines Werkstücks ohne seine Schädigung zu ermöglichen, liegt in seinem Einsatz bei der Herstellung. Gerade bei den additiven Bearbeitungsverfahren (3D-Druck) besteht ein grosses Preisgefälle zwischen Werkzeugmaschinen, die die erforderliche Endpräzision aufweisen, und solchen mit unzulässig hohen Toleranzen. Mithilfe obigen Verfahrens ist es denkbar, ein Werkstück, insbesondere ein zahntechnisches oder sonstiges Modell, zunächst mit einer Werkzeugmaschine geringerer Genauigkeit und entsprechendem Übermass herzustellen und das Produkt dann in einer Werkzeugmaschine, in der Regel einer Werkzeugmaschine der subtraktiven Fertigung wie einer Fräse, nachzuarbeiten, wobei die exakte Position des Werkstücks in der Fräse mit dem vorliegenden Verfahren ermittelt wird.

Die Datenverarbeitungsschritte in der vorangehenden Beschreibung werden bevorzugt automatisiert auf einem Computer oder Prozessor auf der Grundlage eines Programms ausgeführt. Insbesondere gilt das für die Umrechnung der gescannten Bilder in die Darstellung des CAM-Systems und die Umrechnung der CAM-Daten auf das Koordinatensystem der realen Prothese bzw. des realen Werkstücks in der Position, die es im Rohling und in der Werkzeugmaschine einnimmt.

Aus der vorangehenden Beschreibung der Ausführungsbeispiele sind dem Fachmann vielfältige Abwandlungen und Ergänzungen zugänglich, ohne den Schutzbereich der Erfindung zu verlassen, der durch die Ansprüche definiert ist. Einige denkbare Varianten sind in der Beschreibung der Ausführungsbeispiele erwähnt.

Denkbar ist auch:
- Die Erfindung wird bei der Nachbearbeitung von beliebigen Werkstücken angewendet.
- Der Rohling wird nicht zu einem Teil des Werkstücks und dient damit ausschliesslich als Basis. Er kann also aus einem Material bestehen, das ihn als Werkstückhalter in dem angewendeten Bearbeitungsverfahren besser geeignet macht.
- Der Abstand der Schlüsselstrukturen bzw. der Maschinenreferenzmarkierungen beträgt mindestens 1/3 eines grössten Durchmessers des Werkstücks in der Projektion auf den Rohling bzw. die Basis.
- Insbesondere in Verfahren, für die prototypisch das zweite Ausführungsbeispiel steht, sind eine bis alle Schlüsselstrukturen nicht räumlich ausgebildet, sondern zweidimensional oder im Wesentlichen eindimensional, z.B. aufgedruckte Strukturen wie Farbmarkierungen, Linienstrukturen, geometrische Figuren und Mischformen davon. Derartige Schlüsselstrukturen im weiteren Sinn in Verfahren analog zum ersten Ausführungsbeispiel erfordern jedoch voraussichtlich einen höheren Aufwand, um Konter und Rohling mithilfe der Schlüsselstruktur exakt zueinander auszurichten, in dem sie relativ zueinander bewegt werden, bis die vorgegebene Position der Schlüsselstrukturen zueinander erreicht ist.

## Patentansprüche

1. Verfahren zum Positionieren eines Werkstücks (1) in einer numerisch gesteuerten Werkzeugmaschine, **dadurch gekennzeichnet, dass** an einem als eine Basis (3) dienenden Rohling ein wenigstens einen Teil des Werkstücks umfassendes Duplikat (7) von der Werkzeugmaschine unter der Kontrolle von ersten Daten ausgebildet wird,
in einem Positionierungsabschnitt des Rohlings mindestens eine Schlüsselstruktur (9, 10) ausgebildet wird,
ein Gegenstück (25) mit Abdruckmasse (17) auf die Basis aufgesetzt wird, wobei mindestens eine Schlüsselstruktur (9, 10) an der Basis und jeweils eine komplementär ausgebildete Schlüsselstruktur (21, 22) am Gegenstück in Eingriff gebracht wird, so dass sich Basis und Gegenstück in vorgegebener relativer Lage zueinander befinden und in der Abdruckmasse ein Negativ der Oberfläche des Duplikats gebildet wird, und
aus der Basis das Duplikat entfernt wird,
so dass das Gegenstück reproduzierbar in gleicher relativer Lage an der Basis anbringbar ist und das Werkstück reproduzierbar in der Position entsprechend den ersten Daten am Rohling durch Einpassen in das Negativ anbringbar ist.

2. Verfahren gemäss Anspruch 1, **gekennzeichnet durch** die anschliessenden Schritte:
das Werkstück (1) wird auf der Basis (3) an der Stelle des entfernten Duplikats (7) angeordnet,
das Gegenstück (25) wird unter Eingreifen der mindestens einen Schlüsselstruktur (9,10) der Basis (3) mit der mindestens einen Schlüsselstruktur (20, 21) am Gegenstück angebracht, wobei das Werkstück so ausgerichtet wird, dass die Abschnitte des Werkstück (1), die im Abdruck (20) negativ ausgebildet sind, in den Abdruck passen, um das Werkstück in derselben Position auf der Basis anzuordnen wie das Duplikat.

3. Verfahren gemäss Anspruch 2, **gekennzeichnet durch** die weiteren Schritte:
vor dem Aufsetzen auf die das Werkstück (1) tragende Basis (3) wird wenigstens einer von einem wirksamen Teil des Abdrucks (20) und einem wirksamen Teil des Bereichs des Werkstücks (1), die dem Abdruck (20) entspricht, mit einer haftvermittelnden Schicht versehen, so dass das Werkstück am Abdruck mit genügender Festigkeit haftet, um an dem nicht vom Abdruck bedeckten Teil bearbeitet zu werden.

4. Verfahren gemäss einem der Ansprüche 2 bis 3, **dadurch gekennzeichnet, dass** das Werkstück (1) auf der Basis (3) mittels eines haftvermittelnden Materials (29) angebracht wird und das haftvermittelnde Material zu einer Verbindung zwischen Basis (3) und Werkstück verfestigt wird.

5. Verfahren gemäss Anspruch 4, **dadurch gekennzeichnet, dass** das haftvermittelnde Material (29) geeignet ist, einen Teil des bearbeiteten Werkstücks zu bilden.

6. Verfahren gemäss einem der Ansprüche 1 bis 5, **dadurch gekennzeichnet, dass** die Schlüsselstrukturen (9, 10, 20, 21) ausgebildet sind, dass beim Trennen und Wiederverbinden von Basis (3) und Gegenstück (25) eine maximale Verschiebung von 0,5 mm, bevorzugt von maximal 0,2 mm, und besonders bevorzugt von maximal 0,1 mm des Werkstücks (1) oder seines Duplikats (7) vor und nach dem Trennen und Wiederverbinden eingehalten wird.

7. Verfahren gemäss einem der Ansprüche 1 bis 6, **dadurch gekennzeichnet dass** die Schlüsselstrukturen (9,10) ausserhalb der vom Werkstück eingenommenen Fläche auf der Basis (3) ausgebildet werden.

8. Vorrichtung **zum Durchführen des Verfahrens gemäss einem der Ansprüche** 1 **bis** 7, wobei
die Vorrichtung eine Basis (3) und ein Gegenstück (25) umfasst,
Basis und Gegenstück lösbar miteinander verbindbar sind, wobei zwischen Basis und Gegenstück im miteinander verbundenen Zustand das Werkstück angeordnet werden kann,
die Verbindung zwischen Basis und Gegenstück eine Schlüsselstruktur (9, 10; 21, 22) aufweist, die reproduzierbar ein Verbinden von Basis und Gegenstück in vorgegebener Position relativ zueinander sicherstellt, und
das Gegenstück eine wenigstens zu einem Teil des Werkstücks komplementär ausgebildete Referenzierzone aufweist, die die reproduzierbare Anbringung des Werkstücks an einer vorgegebenen Position am Gegenstück sicherstellt.

9. Vorrichtung gemäss Anspruch 8, **dadurch gekennzeichnet, dass** die Schlüsselstrukturen (9, 10, 21, 22) komplementär an Basis (3) und Gegenstück (25) ausgebildete Erhebungen und Vertiefungen umfassen, die beim Verbinden von Basis und Gegenstück ineinander eingreifen und in derartiger Zahl und Form vorhanden sind, dass eine Bewegung von Basis und Gegenstück relativ zueinander auf die Bewegung zum Verbinden und Trennen beschränkt ist.

10. Vorrichtung gemäss Anspruch 9, **dadurch gekennzeichnet, dass** die Schlüsselstrukturen (9, 10, 21, 22) säulenförmige Noppen umfassen, die mit Wänden der komplementär ausgebildeten Schlüsselstruktur beim Zusammensetzen von Basis (3) und Gegenstück (25) in gleitenden Kontakt treten, so dass eine Bewegung quer zur Längsachse der Säulen verhindert ist.

## Claims

1. Method for positioning a workpiece (1) in a numerically controlled machine tool, **characterized in that**
on a blank serving as a base (3), a duplicate (7) comprising at least part of the workpiece is formed by the machine tool under the control of first data,
at least one key structure (9, 10) is formed in a positioning section of the blank,
a counter piece (25) comprising an impression compound (17) is placed on the base, at least one key structure (9, 10) on the base and a respective complementarily formed key structure (21, 22) on the counter piece being brought into engagement with each other so that the base and the counter piece are in a predetermined relative position to one another and a negative of the surface of the duplicate is formed in the impression compound, and the duplicate is removed from the base,
so that the counter piece can be reproducibly attached to the base in the same relative position and the workpiece can be reproducibly attached to the blank in the position corresponding to the first data by fitting it into the negative.

2. Method according to claim 1, **characterized by** the subsequent steps of:
placing the workpiece (1) on the base (3) at the location of the removed duplicate (7), attaching the counter piece (25) with the at least one key structure (9,10) of the base (3) engaging the at least one key structure (20, 21) on the counter piece while aligning the workpiece so that the portions of the workpiece (1) that are negatively formed in the imprint (20) fit into the imprint,
in order to place the workpiece on the base in the same position as the duplicate.

3. Method according to claim 2, **characterized by** the further steps of:
providing, prior to its placement on the base (3) supporting the workpiece (1), at least one of an effective portion of the impression (20) and an effective portion of the area of the workpiece (1) that corresponds to the impression (20) with an adhesion-promoting layer so that the workpiece adheres to the impression with sufficient strength to be machined on the portion that is not covered by the impression.

4. Method according to one of claims 2 to 3, **characterized in that** the workpiece (1) is attached to the base (3) by means of an adhesion-promoting material (29) and the adhesion-promoting material is solidified to form a bond between the base (3) and the workpiece.

5. Method according to claim 4, **characterized in that** the adhesion-promoting material (29) is suitable to form a part of the machined workpiece.

6. Method according to any one of claims 1 to 5, **characterized in that** the key structures (9, 10, 20, 21) are designed such that when the base (3) and the counter piece (25) are separated and reconnected, a maximum displacement of 0.5 mm, preferably of at most 0.2 mm, and particularly preferably of at most 0.1 mm, of the workpiece (1) or its duplicate (7) is not exceeded before and after their separation and reconnection.

7. Method according to any one of claims 1 to 6, **characterized in that** the key structures (9, 10) are formed on the base (3) outside the area occupied by the workpiece.

8. Device for performing the method according to one of claims 1 to 7, wherein the device comprises a base (3) and a counter piece (25),
the base and the counter piece are detachably connectable to each other while the workpiece can be arranged between the base and the counter piece in the connected state,
the connection between the base and the counter piece includes a key structure (9, 10; 21, 22) which reproducibly ensures a connection of the base and the counter piece in a predetermined position relative to each another, and
the counter piece has a referencing zone which is complementary to at least part of the workpiece and ensures the reproducible attachment of the workpiece to the counter piece at a predetermined position.

9. Device according to claim 8, **characterized in that** the key structures (9, 10, 21, 22) comprise elevations and recesses which are complementarily formed on the base (3) and the counter piece (25) and engage each other when the base and the counter piece are connected, and which are provided in such a number and shape that a movement of the base and the counter piece relative to each other is limited to the connecting and separating movement.

10. Device according to claim 9, **characterized in that** the key structures (9, 10, 21, 22) comprise column-shaped studs which enter into sliding contact with walls of the complementarily formed key structure when the base (3) and the counter piece (25) are assembled, so that a movement transverse to the longitudinal axis of the columns is prevented.

## Revendications

1. Procédé pour le positionnement d'une pièce d'oeuvre (1) dans une machine-outil à contrôle numérique, **caractérisé en ce que**,
sur une ébauche servant de base (3), un duplicata (7) comprenant au moins une partie de la pièce d'oeuvre est réalisée par la machine-outil sous le contrôle de premières données,
dans une portion de positionnement de l'ébauche, au moins une structure de clé (9, 10) est prévue,
une contre-pièce (25) avec masse d'empreinte (17) est posée sur la base, où au moins une structure de clé (9, 10) sur la base et respectivement une structure de clé (21, 22), de forme complémentaire, sur la contre-pièce, sont mises en prise, de sorte que la base et la contre-pièce se trouvent dans une position relative prédéterminée entre elles et que, dans la masse d'empreinte, un négatif du duplicata est formé, et le duplicata est retiré de la base,
de sorte que la contre-pièce peut être montée sur la base de manière reproductible dans la même position relative et la pièce d'oeuvre peut être montée de manière reproductible dans la position en fonction des premières données sur l'ébauche par l'insertion dans le négatif.

2. Procédé selon la revendication 1, **caractérisé par** les étapes y suivantes :
la pièce d'oeuvre (1) est disposée sur la base (3) à l'endroit du duplicata (7) retiré,
la contre-pièce (25) est montée par la mise en prise de l'au moins une structure de clé (9, 10) de la base (3) avec l'au moins une structure de clé (20, 21) de la contre-pièce, la pièce d'oeuvre étant orientée de sorte que les portions de la pièce d'oeuvre (1) qui sont représentées par une forme négative dans l'empreinte (20), sont mis dans l'empreinte afin de disposer la pièce d'oeuvre dans la même position sur la base que le duplicata.

3. Procédé selon la revendication 2, **caractérisé par** les étapes supplémentaires :
avant la pose sur la base (3) supportant la pièce d'oeuvre (1), au moins un élément parmi une partie efficace de l'empreinte (20) et une partie efficace de la zone de la pièce d'oeuvre (1) qui correspond à l'empreinte (20), est muni d'une couche améliorant l'adhérence, de sorte que la pièce d'oeuvre adhère suffisamment à l'empreinte pour être usinée sue la partie non recouverte par l'empreinte.

4. Procédé selon l'une des revendications 2 à 3, **caractérisé en ce que** la pièce d'oeuvre (1) est montée sur la base (3) au moyen d'un matériau améliorant l'adhérence (29) et le matériau améliorant l'adhérence est solidifié afin de constituer une liaison entre la base (3) et la pièce.

5. Procédé selon la revendication 4, **caractérisé en ce que** le matériau améliorant l'adhérence (29) est conçu pour former une partie de la pièce d'oeuvre usinée.

6. Procédé selon l'une des revendications 1 à 5, **caractérisé en ce que** les structures de clés (9, 10, 20, 21) sont conçues de sorte que, lors de la séparation et du raccordement de la base (3) et de la contre-pièce (25), un décalage maximal de 0,5 mm, de préférence de 0,2 mm maximum, et plus particulièrement de préférence de 0,1 mm maximum de la pièce d'oeuvre (1) ou de son duplicata (7) est respecté avant et après la séparation et le raccordement.

7. Procédé selon l'une des revendications 1 à 6, **caractérisé en ce que** les structures de clés (9, 10) sont réalisées sur la base (3) à l'extérieur de la surface occupée par la pièce.

8. Dispositif pour l'exécution du procédé selon l'une des revendications 1 à 7, dans lequel le dispositif comprend une base (3) et une contre-pièce (25),
la base et la contre-pièce pouvant être reliées entre elles de manière amovible, la pièce d'oeuvre pouvant être disposée entre la base et la contre-pièce dans l'état relié entre elles,
la liaison entre la base et la contre-pièce comprend une structure de clé (9, 10 ; 21, 22) qui assure, de manière reproductible, une liaison de la base et de la contre-pièce dans une position relative prédéterminée entre elles et
la contre-pièce comprend une zone de référencement d'une forme complémentaire à au moins une partie de la pièce d'oeuvre, qui assure le montage reproductible de la pièce d'oeuvre à une position prédéterminée sur la contre-pièce.

9. Dispositif selon la revendication 8, **caractérisé en ce que** les structures de clés (9, 10, 21, 22) comprennent des bossages et des renfoncements réalisés de manière complémentaire sur la base (3) et la contre-pièce (25), qui, lors du raccordement de la base et de la contre-pièce, s'emboîtent entre eux et dont le nombre et la forme permettent une limitation d'un mouvement de la base et de la contre-pièce l'une par rapport à l'autre au mouvement pour le raccordement et la séparation.

10. Dispositif selon la revendication 9, **caractérisé en ce que** les structures de clés (9, 10, 21, 22) comprennent des protubérances en forme de colonnes, qui entrent en contact glissant avec des parois de la structure de clé de forme complémentaire lors du raccordement de la base (3) et de la contre-pièce (25), de façon à empêcher un mouvement transversalement par rapport à l'axe longitudinal des colonnes.
